# EUROPÄISCHE PATENTSCHRIFT

(11) **EP 1 877 460 B1**
(45) Veröffentlichungstag und Bekanntmachung des Hinweises auf die Patenterteilung: **18.02.2009**
(21) Anmeldenummer: 06754847.9
(22) Anmeldetag: 25.04.2006
(51) Int. Cl.: C08G 18/66, C08G 18/42, C08G 18/76

(54) **THERMOPLASTISCHE POLYURETHANE**
THERMOPLASTIC POLYURETHANES
POLYURETHANE THERMOPLASTIQUE

(30) Priorität: 26.04.2005 DE 102005019663
(43) Veröffentlichungstag der Anmeldung: 16.01.2008
(73) Patentinhaber: BASF SE, 67056 Ludwigshafen (DE)
(72) Erfinder: DUWENHORST, Jörn, 49448 Lemförde (DE); MALZ, Hauke, 49356 Diepholz (DE); SCHEFFER, Karin, 49448 Lemförde (DE); FLUG, Thomas, 49419 Wagenfeld (DE); VALLO, Martin, 49565 Bramsche (DE)
(86) Internationale Anmeldenummer: PCT/EP2006/061824
(87) Internationale Veröffentlichungsnummer: WO 2006/114418

(56) Entgegenhaltungen:
- EP-A- 0 398 093
- EP-A- 1 031 588
- EP-A- 1 338 614
- WO-A-03/014179
- DE-A1- 3 642 667

## Beschreibung

Die Erfindung bezieht sich auf bevorzugt transparente thermoplastische Polyurethane, die bevorzugt keine Weichmacher enthalten, mit einer Härte zwischen 50 Shore-A und 80 Shore-A, bevorzugt zwischen 65 Shore-A und 75 Shore-A, auf der Basis von (b) Polyesterdiolen, dadurch gekennzeichnet, dass als (b) Polyesterdiole ein Polyesterdiol (b1) auf der Basis von Butan-1,4-diol sowie mindestens einem weiteren Diol mit mindestens 5 Kohlenstoffatomen, bevorzugt 5, 6 oder 7 Kohlenstoffatomen, insbesondere 6 Kohlenstoffatomen, sowie ein Polyesterdiol (b2) auf der Basis von Butan-1,4-diol sowie mindestens einem weiteren Diol mit zwei oder drei Kohlenstoffatomen, insbesondere 2 Kohlenstoffen, vorliegen. Außerdem betrifft die Erfindung Verfahren zur Herstellung von bevorzugt transparenten, bevorzugt weichmacherfreien thermoplastischen Polyurethanen mit einer Härte zwischen 50 Shore-A und 80 Shore-A, bevorzugt zwischen 65 Shore-A und 75 Shore-A durch Umsetzung von (a) Isocyanat mit (b) gegenüber Isocyanaten reaktiven Verbindungen mit einem Molekulargewicht von 500 g/mol bis 10000 g/mol und gegebenenfalls (c) Kettenverlängerungsmitteln mit einem Molekulargewicht von 50 g/mol bis 499 g/mol gegebenenfalls in Gegenwart von (d) Katalysatoren und/oder (e) üblichen Hilfsstoffen. Des weiteren bezieht sich die Erfindung auf derart erhältliche thermoplastische Polyurethane.

Thermoplastische Polyurethane, im Folgenden auch als TPU bezeichnet, sind Kunststoffe mit einem vielfältigen Anwendungsfeld. So finden sich TPU beispielsweise in der Automobilindustrie, z.B. in Instrumententafelhäuten, in Folien, in Kabelummantelungen, in der Freizeitindustrie, als Absatzflecke, als Funktions- und Designelement bei Sportschuhen, als Weichkomponente in Hart -Weichkombinationen und in vielfältigen weiteren Anwendungen.

Üblicherweise weisen TPU einen Härtegrad von 80 Shore A bis 74 Shore D auf. Viele der oben genannten Anwendungen erfordern aber einen Härtegrad unterhalb der 80 Shore A. Aus diesem Grund ist es Stand der Technik, zu TPU Weichmacher zuzugeben, mit denen die Shorehärte abgesenkt werden kann. Beispiele für gängige Weichmacher sind Benzoate, Phthalate und Phosphorsäureester.

Bei der Auswahl des Weichmachers ist bevorzugt darauf zu achten, dass das Produkt verträglich mit dem TPU ist. Verträglich bedeutet in diesem Zusammenhang, dass sich der Weichmacher während der für die TPU- Herstellung üblichen Verfahren dem TPU zumischen lassen muss und dass der Weichmacher anschließend während der ganzen Zeit möglichst im Produkt verbleibt und nicht durch Ausschwitzen oder Ausdampfen verloren geht. Zudem sollten die mechanischen Eigenschaften des TPU, z.B. der Abrieb und die elastomeren Eigenschaften nicht schlechter werden.

Viele weichgemachte TPU gehen in Anwendungen, die zudem dem Sonnenlicht ausgesetzt sind, z.B. Designelemente der Schuhindustrie. Hier ist es von Nachteil, wenn der Weichmacher zu einer Vergilbung des Produktes durch UV-Abbau beiträgt.

Ebenso sind viele weichgemachte TPU in ihrer Anwendung Umwelteinflüssen ausgesetzt, die zu einem hydrolytischen Molmassenabbau führen. Dementsprechend ist es problematisch, wenn der Weichmacher die Hydrolyse auch noch verstärkt, sei es katalytisch oder durch Abbauprodukte des Weichmachers, die z.B. durch Hydrolyse des Weichmachers einstanden sind, z.B. Carbonsäuren aus der Hydrolyse eines estergruppenhaltigen Weichmachers.

Aber auch, wenn der Weichmacher alle vorher beschriebenen Anwendungen erfüllt, so bleibt doch immer noch die Gefahr der Migration des Weichmachers aus dem weichgemachten TPU heraus in ein Medium, das mit dem weichgemachten TPU in Kontakt steht. Bei Dichtungen aus weichgemachtem TPU für Treibstofftanks kann es z.B. zur Migration des Weichmachers in den Treibstoff kommen. Dies führt zu einer Versprödung der Dichtung. Genauso kann es bei Lebensmittelanwendungen zu einer Migration des Weichmachers in das Lebensmittel kommen. Weichgemachte TPU sind deshalb im allgemeinen nicht für Lebensmittelanwendungen geeignet.

Weiche, weichmacherfreie TPU auf der Basis von Polyersterdiolen sind in der EP-A 1 031 588 und der EP-A 1 338 614 beschrieben.

Die Aufgabe der vorliegenden Erfindung bestand somit darin, ein weiches thermoplastisches Polyurethan zu entwickeln, welches eine Shore-A Härte zwischen 50 Shore-A und 80 Shore-A, besonders bevorzugt zwischen 65 A und 75 A hat. Dabei sollte das weiche TPU keine Migration eines Weichmachers aus dem TPU aufweisen und nach Möglichkeit über eine sehr gute Stabilität gegenüber Witterungseinflüssen verfügen. Außerdem sollte das TPU bevorzugt transparent sein und möglichst wenig oder keinen Schrumpf aufweisen.

Diese Aufgaben konnten durch bevorzugt transparente thermoplastische Polyurethane, die bevorzugt keine Weichmacher enthalten, mit einer Härte zwischen 50 Shore-A und 80 Shore-A, bevorzugt zwischen 65 Shore-A und 75 Shore-A, auf der Basis von (b) Polyesterdiolen gelöst werden, wobei als (b) Polyesterdiole ein Polyesterdiol (b1) auf der Basis von Butan-1,4-diol sowie mindestens einem weiteren Diol mit mindestens 5 Kohlenstoffatomen, bevorzugt 5, 6 oder 7 Kohlenstoffatomen, insbesondere 6 Kohlenstoffatomen sowie ein Polyesterdiol (b2) auf der Basis von Butan-1,4-diol sowie mindestens einem weiteren Diol mit zwei oder drei Kohlenstoffatomen, bevorzugt 2 Kohlenstoffatomen vorliegen.

Die erfindungsgemäßen weichen TPU zeichnen sich insbesondere dadurch aus, dass sie bei einfacher Herstellung weitgehend schrumpffrei sind und gleichzeitig sehr gute sonstige Eigenschaften aufweisen.

Polyesterdiole und ihr Einsatz zur Herstellung von thermoplastischen Polyurethanen ist allgemein bekannt und vielfältig beschrieben. Polyesterdiole basieren auf einer Diolkomponente und einer Dicarbonsäurekomponente. Die erfindungsgemäßen TPU basieren auf mindestens zwei Polyesterdiolen (b1) und (b2), die sich in ihrer jeweiligen Diolkomponente unterscheiden.

Das Polyesterdiol (b1) basiert bevorzugt auf Butan-1,4-diol und Hexan-1,6-diol. Das Molekulargewicht des Polyesterdiols (b1) ist bevorzugt größer als 2600 g/mol, besonders bevorzugt zwischen 2600 g/mol und 4000 g/mol, insbesondere zwischen 2800 g/mol und 3500 g/mol.

In dem Polyesterdiol (b1) beträgt das Molverhältnis von Butan-1,4-diol zu dem weiteren Diol mit mindestens 5 Kohlenstoffatomen, bevorzugt 5, 6 oder 7 Kohlenstoffatomen, insbesondere 6 Kohlenstoffatomen bevorzugt zwischen 0,5 : 1 und 1,5 : 1, besonders bevorzugt zwischen 0,75 : 1 und 1,25 : 1.

Das Polyesterdiol (b2) basiert bevorzugt auf Butan-1,4-diol und Ethan-1,2-diol. Das Molekulargewicht des Polyesterdiols (b2) ist bevorzugt kleiner oder gleich 2500 g/mol, besonders bevorzugt zwischen 500 g/mol und 2500 g/mol, insbesondere zwischen 1500 g/mol 2500 g/mol.

In dem Polyesterdiol (b2) beträgt das Molverhältnis von Butan-1,4-diol zu dem weiteren Diol mit zwei oder drei Kohlenstoffatomen, insbesondere 2 Kohlenstoffen bevorzugt zwischen 0,5 : 1 und 1,5 : 1, besonders bevorzugt zwischen 0,75 : 1 und 1,25 : 1.

Die Polyesterdiole (b1) und (b2) können auf allgemein bekannten Dicarbonsäuren basieren. Bevorzugt basieren die Polyesterdiole (b1) und (b2) auf verzweigten und/oder nicht verzweigten, bevorzugt linearen, nicht verzweigten Dicarbonsäuren mit vier bis 12 Kohlenstoffatomen, besonders bevorzugt Adipinsäure.

Durch den erfindungsgemäßen Einsatz zweier unterscheidlicher Ester, die sich in Ihrer Polarität und bevorzugt auch ihrem Molekulargewicht unterscheiden, konnte durch den Einsatz des unpolaren Polyesters die Kristallisation der Hartphase unterstützt werden, während der polare Polyester den Schrumpf unterdrückt. Durch die Verwendung der Polyolmischung wird die Weichphasenkristallisation verhindert und so ein nachträgliches Aushärten und Vertrüben der Prüfkörper verhindert. Gerade die besonders bevorzugten, spezifischen Mischungen enthaltend die zwei Polyester (b1) und (b2) zeigen ein besonderes Optimum hinsichtlich der gewünschten Eigenschaften wie insbesondere Weichheit ohne Weichmacher, möglichst geringer Schrumpf, Transparenz, niedrige Abriebswerte und gute Zugfestigkeiten. Zudem zeigen die TPU auf der Basis der erfindungemäßen Polyester ein im Vergleich zu Adipinsäure-Butandiol-ester verringertes Ausblühverhalten.

Besonders bevorzugt sind erfindungsgemäß thermoplastische Polyurethane basierend auf einem Polyesterdiol (b1) mit einem Molekulargewicht zwischen 2600 g/mol und 4000 g/mol auf der Basis von Butan-1,4-diol und Hexan-1,6-diol in einem Molverhältnis von Butan-1,4-diol : Hexan-1,6-diol zwischen 0,5 : 1 und 1,5 : 1 sowie Adipinsäure sowie auf einem Polyesterdiol (b2) mit einem Molekulargewicht zwischen 1500 g/mol und 2500 g/mol auf der Basis von Butan-1,4-diol und Ethan-1,2-diol in einem Molverhältnis von Butan-1,4-diol : Ethan-1,2-diol zwischen 0,5 : 1 und 1,5 : 1 sowie Adipinsäure, wobei das Gewichtsverhältnis von Polyesterdiol (b1) : Polyesterdiol (b2) zwischen 0,75: 1 und 1,25 : 1, besonders bevorzugt zwischen 0,9 : 1 und 1,1 : 1, insbesondere 1 : 1 beträgt.

Verfahren zur Herstellung der Polyesterdiole (b1) und (b2) durch Polykondensation der entsprechenden Diole mit mindestens einer Dicarbonsäure bevorzugt bei erhöhter Temperatur und vermindertem Druck bevorzugt in Gegenwart bekannter Katalysatoren sind allgemein bekannt und vielfältig beschrieben. Auch sind geeignete Polyesterdiole kommerziell erhältlich.

Zur Einstellung von Härte der TPU können die Aufbaukomponenten (b) und (c) bevorzugt in molaren Verhältnissen von Komponente (b) zu insgesamt einzusetzenden Kettenverlängerungsmitteln (c) zwischen 1 : 1 und 1 : 2,5, bevorzugt zwischen 1 : 1 und 1 : 2, insbesondere zwischen 1 : 1,2 und 1 : 1,9 eingesetzt werden.

Verfahren zur Herstellung von TPU sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfsstoffen herstellt werden.

Erfindungsgemäß erfolgt die Herstellung von bevorzugt transparenten, bevorzugt weichmacherfreien thermoplastischen Polyurethanen mit einer Härte zwischen 50 Shore-A und 80 Shore-A, bevorzugt zwischen 65 Shore-A und 75 Shore-A durch Umsetzung von (a) Isocyanat mit (b) gegenüber Isocyanaten reaktiven Verbindungen mit einem Molekulargewicht von 500 g/mol bis 10000 g/mol und gegebenenfalls (c) Kettenverlängerungsmitteln mit einem Molekulargewicht von 50 g/mol bis 499 g/mol gegebenenfalls in Gegenwart von (d) Katalysatoren und/oder (e) üblichen Hilfsstoffen, wobei man als (b) Polyesterdiol (b1) auf der Basis von Butan-1,4-diol sowie mindestens einem weiteren Diol mit mindestens 5 Kohlenstoffatomen sowie Polyesterdiol (b2) auf der Basis von Butan-1,4-diol sowie mindestens einem weiteren Diol mit zwei oder drei Kohlenstoffatomen einsetzt. Besonders bevorzugt werden die bereits beschrieben besonders bevorzugten Polyesterdiole (b1) und (b2) eingesetzt.

Bevorzugt wird man die Polyesterdiole (b1) und (b2) in einem Gewichtsverhältnis von (b1): (b2) zwischen 0,75 : 1 und 1,25 : 1, besonders bevorzugt zwischen 0,9 : 1 und 1,1 : 1, insbesondere 1 : 1 einsetzen -.

Im Folgenden sollen beispielhaft die Ausgangskomponenten und Verfahren zur Herstellung der bevorzugten TPU dargestellt werden. Die bei der Herstellung der TPU üblicherweise verwendeten Komponenten (a), (b), (c) sowie gegebenenfalls (d) und/oder (e) sollen im Folgenden beispielhaft beschrieben werden:
a) Als organische Isocyanate (a) können allgemein bekannte aromatische, aliphatische, cycloaliphatische und/oder araliphatische Isocyanate, bevorzugt Diisocyanate eingesetzt werden, beispielsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat, Tri-, Tetra-, Penta-, Hexa-, Hepta- und/oder Oktamethylendiisocyanat, 2-Methyl-pentamethylen-diisocyanat-1,5, 2-Ethyl-butylendüsocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)-cyclohexan (HXDI), 1,4-Cyclohexan-diisocyanat, 1-Methyl-2,4- und/oder -2,6-cyclohexan-düsocyanat und/oder 4,4'-, 2,4'- und 2,2'-Dicyclohexylmethandiisocyanat, bevorzugt 2,2'-, 2,4'- und/oder 4,4'-Diphenylmethandiisocyanat (MDI), 1 ,5-Naphthylendiisocyanat (NDI), 2,4- und/oder 2,6- Toluylendiisocyanat (TDI), Hexamethylendiisocyanat und/oder IPDI, insbesondere 4,4'- MDI und/oder Hexamethylendiisocyanat.
b) Als gegenüber Isocyanaten reaktive Verbindungen (b) werden die eingangs dargestellten Polyesterdiole eingesetzt. Gegebenenfalls können zusätzlich weitere allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefaßt werden, mit Molekulargewichten von 500 bis 12000 g/mol, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man ausschließlich die erfindungsgemäßen Polyesterdiole (b1) und (b2) als gegenüber Isocyanaten reaktive Verbindungen (b) mit Molekulargewichten von 500 bis 12000 g/mol ein.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Alkandiole mit 2 bis 10 C-Atomen im Alkylenrest, bevorzugt Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, insbesondere Butan-1,4-diol.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,00001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel (e) hinzugefügt werden. Genannt seien beispielsweise oberflächenaktive Substanzen, Flammschutzmittel, Keimbildungsmittel, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel. Als Hydrolyseschutzmittel werden bevorzugt oligomere und/oder polymere aliphatische oder aromatische Carbodiimide verwendet. Um die erfindungsgemäßen TPU gegen Alterung zu stabilisieren, werden dem TPU bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98-S136. Ist das erfindungsgemäße TPU während seiner Anwendung thermoxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S.98-107 und S 116-S. 121. Bevorzugt sind solche phenolische Antioxidantien, deren Molekulargewicht größer als 700 g/mol sind. Ein Beispiel für ein bevorzugt verwendetes phenolisches Antioxidans ist Pentaerythrityl-tetrakis (3-(3,5-bis(1,1-dimethylethyl)-4-hydroxyphenyl)propionate) (Irganox^{®} 1010). Die phenolischen Antioxidantien werden im allgemeinen in Konzentrationen zwischen 0,1 und 5 Gew.-% eingesetzt, bevorzugt zwischen 0,1 und 2 Gew.-%, insbesondere zwischen 0,5 und 1,5 Gew.-%, jeweils bezogen auf das Gesamtgewicht des TPU. Auch wenn die erfindungsgemäße TPU aufgrund ihrer bevorzugten Zusammensetzung deutlich stabiler gegen ultravioletter Strahlung sind als z.B. mit Phthtalaten oder Benzoaten weichgemachte TPU, so ist eine Stabilisierung enthaltend nur phenolische Stabilisatoren oft nicht ausreichend. Aus diesem Grund werden die erfindungsgemäßen TPUs, die UV-Licht ausgesetzt werden, bevorzugt zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z.B. zur Gruppe der Zimtsäureester, der Diphenylcyanacrylate, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001, Seite 116-122. In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV-Absorber ein Molekulargewicht von nicht größer als 5000 g/mol, besonders bevorzugt von nicht größer als 2000 g/mol aufweisen. Besonders geeignet als UV-Absorber ist die Gruppe der Benzotriazole. Beispiele für besonders geeignete Benzotriazole sind Tinuvin^{®} 213, Tinuvin^{®} 328, Tinuvin^{®} 571, sowie Tinuvin^{®} 384 und das Eversorb®82. Bevorzugt werden die UV-Absorber in Mengen zwischen 0,01 und 5 Gew.-%, bezogen auf die Gesamtmasse TPU zudosiert, besonders bevorzugt zwischen 0,1 und 2,0 Gew.-%, insbesondere zwischen 0,2 und 0,5 Gew.-%, jeweils bezogen auf das Gesamtgewicht des TPU. Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zu der Komponente (e) bevorzugt zusätzlich zu dem Antioxidans und dem UV-Absorber, noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere. HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123-136. Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen bevorzugt nicht größer als 10000 g/mol, besonders bevorzugt nicht größer als 5000 g/mol sein. Besonders bevorzugter Hindered Amine Light Stabilizer ist das Kondensationsprodukt aus 1-hydroxyethyl-2,2,6,6-tetramethyl-4-hydroxypiperidine und Bernsteinsäure (Tinuvin^{®} 622). Insbesondere bevorzugt ist das Kondensationsprodukt aus 1-hydroxyethyl-2,2,6,6-tetramethyl-4-hydroxypiperidine und Bernsteinsäure (Tinuvin^{®} 622), wenn der Titangehalt des Produktes < 150 ppm, bevorzugt < 50 ppm insbesondere bevorzugt < 10 ppm ist. HALS Verbindungen werden bevorzugt in einer Konzentration zwischen 0,01 und 5 Gew.-% eingesetzt, besonders bevorzugt zwischen 0,1 und 1 Gew.-%, insbesondere zwischen 0,15 und 0,3 Gew.-%, jeweils bezogen auf das Gesamtgewicht des TPU. Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001. Alle in dieser Schrift genannten Molekulargewichte weisen die Einheit [g/mol] auf.

Die Umsetzung der Isocyanate (a) mit den gegenüber Isocyanaten reaktiven Verbindungen (b) und Kettenverlängerungsmitteln (c) kann bei üblichen Kennzahlen erfolgen, bevorzugt bei einer Kennzahl kleiner 1010, besonders bevorzugt bei einer Kennzahl zwischen 900 und 1000, insbesondere zwischen 950 und 1000 . Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 1000 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 1000 liegen mehr Isocyanatgruppen als OH-Gruppen vor.

Die Herstellung der TPU kann nach den bekannten Verfahren diskontinuierlich oder kontinuierlich, beispielsweise mit Reaktionsextrudern oder dem Bandverfahren nach one-shot oder dem Prepolymerverfahren, bevorzugt nach dem one-shot-Verfahren erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert.

Die Verarbeitung der erfindungsgemäßen TPU, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion. Die nach den erfindungsgemäßen Verfahren herstellbaren thermoplastischen Polyurethane, bevorzugt die Folien, Formteile, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Non Wooven, Riemen oder Dämpfungselemente weisen die eingangs dargestellten Vorteile auf.

### Beispiele

### Beispiel 1 (siehe auch Tabelle 1, Beispiel 1)

In einen 2 l Weißblecheimer wurden 1000g einer Polyolmischung bestehend einem Polyesterdiol (b1) mit einem Molekulargewicht von 3000 g/mol auf der Basis von Butan-1,4-diol und Hexan-1,6-diol in einem Molverhältnis von Butan-1,4-diol : Hexan-1,6-diol von 1:1 1 sowie Adipinsäure sowie auf einem zweitem Polyesterdiol (b2) mit einem Molekulargewicht von 2000 g/mol auf der Basis von Butan-1,4-diol und Ethan-1,2-diol in einem Molverhältnis von Butan-1,4-diol : Ethan-1,2-diol von 1:1 1 sowie Adipinsäure, wobei das Gewichtsverhältnis von Polyesterdiol (b1) : Polyesterdiol (b2) 1 : 1 beträgt und 64,04 g 1,4-Butandiol eingewogen und auf 90°C aufgeheizt. Anschließend wurde unter Rühren 0,1 Gew.-% Irganox0 1098 und 0,1 Gew.-% Irganox® 1010 sowie 10 ppm Zinn-di-octoat zugegeben. Nach anschließender Erwärmung der Lösung auf wieder 90°C wurden 284g 4,4'-MDI (Methylendiphenyldüsocyanat) zugegeben und so lange gerührt, bis die Lösung homogen war. Anschließend wurde die Reaktionsmasse in eine flache Schale gegossen und bei 125°C auf einer Heizplatte 10 min getempert. Danach wurde die entstandene Schwarte in einem Heizschrank 24 h bei 100°C getempert. Nach dem Granulieren der Gießplatten wurden diese auf einer Spritzgussmaschine zu 2 mm Spritzplatten verarbeitet. Das Produkt hatte eine Shorehärte von Shore 71 A und Abrieb von 25 mm³. Die Spritzplatte war hoch transparent und zeigte fast keine Schwindung auf.

### Vergleichsbeispiel 2 (siehe auch Tabelle 1, Beispiel 2)

In einen 2 l Weißblecheimer wurden 1000 g eines Polyesterdiols mit einem Molekulargewicht von 2000 g/mol auf der Basis von Butan-1,4-diol und 2-Methylpropan-1,3-diol in einem Molverhältnis von Butan-1,4-diol : 2-Methylpropan-1,3-diol von 1:1 sowie Adipinsäure (Polyol 1), sowie 65,72 g 1,4-Butandiol eingewogen und auf 90°C aufgeheizt. Anschließend wurde unter Rühren 0,1 Gew.-% Irganox® 1098 und 0,1 Gew.-% Irganox® 1010 sowie 10,0 ppm Zinn-di-octoat zugegeben. Nach anschließender Erwärmung der Lösung auf wieder 90°C wurden 310g 4,4'-MDI (Methylendiphenyldiisocyanat) zugegeben und so lange gerührt, bis die Lösung homogen war. Anschließend wurde die Reaktionsmasse in eine flache Schale gegossen und bei 125°C auf einer Heizplatte 10 min getempert. Danach wurde die entstandene Schwarte in einem Heizschrank 24 h bei 100°C getempert. Nach dem Granulieren der Gießplatten wurden diese auf einer Spritzgussmaschine zu 2 mm Spritzplatten verarbeitet. Das Produkt hatte eine Härte von Shore 66 A und einen Abrieb von 51 mm³. Die Spritzplatte war hoch transparent und zeigte aber eine deutliche Schwindung von 4,8% auf.

Die in der Tabelle 1 dargestellten Beispiele wurden analog dem Beispiel 1 bzw. 2 mit den in der Tabelle angegebenen Polyolen, Kettenverlängerer und Isocyanat umgesetzt. Angegeben sind jeweils die Gewichtsangaben der Polyole b1, b2 und des Gegenbeispiels Polyol 1 mit den variierten Molekulargewichten. Die molare Zusammensetzung der Polyole ist den Beispielen 1 und 2 zu entnehmen.

**Tabelle 1**

| Beispiel | b1 | | Polyol 1 | | b2 | Butandiol [g] | MDI [g] |
|---|---|---|---|---|---|---|---|
| | Mn = 2000 | Mn = 3000 | Mn = 2000 | Mn = 3000 | Mn = 2000 | | |
| 1 | | 500 | | | 500 | 64,040 | 284,0 |
| 2 | | | 1000 | | | 65,720 | 310,0 |
| 3 | 1000 | | | | | 64,620 | 310,0 |
| 4 | | | | | 1000 | 65,180 | 308,0 |
| 5 | | 500 | | | 500 | 55,760 | 261,0 |
| 6 | | | | 500 | 500 | 56,300 | 262,8 |
| 7 | | | | 750 | 250 | 64,810 | 275,0 |
| 8 | | | | 500 | 500 | 65,360 | 286,0 |
| 9 | | | | 250 | 750 | 65,180 | 295,0 |

Die Beispiele 2 bis 4 sowie 6 bis 9 stellen Vergleichsbeispiele dar, bei denen entweder nur ein Polyol zum Einsatz kommt (Vergleichsbeispiele 2-4) oder das nicht erfindungsgemäße Polyol 1, bei dem nur Diole mit vier Kohlenstoffatomen zum Einsatz kommen und eine Kombination dieses Polyols 1 mit dem Polyol (b2) verwendet wurden (Vergleichsbeispiele 6-9).

Die folgenden mechanischen Werte wurden für die Beispiele 1 bis 9 an 2 mm Spritzplatten nach Temperung bei 20 h / 100°C gemessen. Der Schrumpf in % wurde an einem Formkörper mit einer Ausgangslänge von 11,9cm ermittelt. Nach Temperung des Formkörpers wurde die Länge am linken Rand, in der Mitte und am rechten Rand gemessen und gemittelt.

**Tabelle 2**

| Beispiel | Zugfestigkeit [MPa] | Reißdehnung [%] | Abrieb [mm³] | Härte [Shore A] | Schrumpf [%] |
|---|---|---|---|---|---|
| 1 | 36 | 790 | 25 | 71 | 0, 85 |
| 2 | 32 | 830 | 51 | 66 | 4,8 |
| 3 | 46 | 600 | 28 | 75 | 1,7 |
| 4 | 36 | 770 | 39 | 70 | 3, 8 |
| 5 | 34 | 800 | 27 | 67 | 0, 85 |
| 6 | 37 | 870 | 32 | 65 | 5 |
| 7 | 34 | 880 | 69 | 69 | 3,8 |
| 8 | 35 | 900 | 60 | 68 | 1,7 |
| 9 | 39 | 870 | 49 | 69 | 3,4 |

An den Beispielen 2 bis 4 erkennt man, dass Polyol (b1) offenbar intrinsisch den größten Vorteil gegen Schrumpf zeigt, aber keinen Vorteil in der Härte bietet. Mit den erfindungsgemäßen Beispielen 1 und 5 zeigt sich deutlich die Reduktion der Härte durch den Einsatz der Mischungen enthaltend (b1) und (b2) bei gleichzeitiger Halbierung des Schrumpfes. Das Gegenbeispiel 6 zeigt hingegen einen signifikanten Schrumpf. Eine genauere Analyse der Zusammensetzung in den nicht erfindungsgemäßen Beispielen 7 bis 9 offenbart, dass die exakte 1 : 1 Mischung ein Optimum darstellt.

### Vergleichsbeispiel 10

In einen 2 l Weißblecheimer wurden 1000 g eines Polyesterdiols mit einem Molekulargewicht von 2400 g/mol auf der Basis von Butan-1,4-diol und Adipinsäure, sowie 64,85g 1,4-Butandiol eingewogen und auf 90°C aufgeheizt. Anschließend wurde unter Rühren 0,1 Gew.-% Irganox® 1098 und 0,1 Gew.-% Irganox® 1010 sowie 10,0 ppm Zinn-di-octoat zugegeben. Nach anschließender Erwärmung der Lösung auf wieder 90°C wurden 285g 4,4'-MDI (Methylendiphenyldiisocyanat) zugegeben und so lange gerührt, bis die Lösung homogen war. Anschließend wurde die Reaktionsmasse in eine flache Schale gegossen und bei 125°C auf einer Heizplatte 10 min getempert. Danach wurde die entstandene Schwarte in einem Heizschrank 24 h bei 100°C getempert. Nach dem Granulieren der Gießplatten wurden diese auf einer Spritzgussmaschine zu 2 mm Spritzplatten verarbeitet. Das Produkt hatte eine Härte von Shore 74 A.

Die Spritzplatte war hoch transparent, schrumpffrei, zeigte aber bereits nach einer Woche Lagerung bei Raumtemperatur sehr starke Ausblühungen.

## Patentansprüche

1. Thermoplastische Polyurethane mit einer Härte zwischen 50 Shore-A und 80 Shore-A auf der Basis von (b) Polyesterdiolen, **dadurch gekennzeichnet, dass** als (b) Polyesterdiole ein Polyesterdiol (b1) auf der Basis von Butan-1,4-diol sowie mindestens einem weiteren Diol mit mindestens 5 Kohlenstoffatomen sowie ein Polyesterdiol (b2) auf der Basis von Butan-1,4-diol sowie mindestens einem weiteren Diol mit zwei oder drei Kohlenstoffatomen vorliegen.

2. Thermoplastische Polyurethane gemäß Anspruch 1, **dadurch gekennzeichnet, dass** das Polyesterdiol (b1) auf Butan-1,4-diol und Hexan-1,6-diol basiert.

3. Thermoplastische Polyurethane gemäß Anspruch 1, **dadurch gekennzeichnet, dass** das Polyesterdiol (b1) ein Molekulargewicht größer als 2600 g/mol aufweist.

4. Thermoplastische Polyurethane gemäß Anspruch 1, **dadurch gekennzeichnet, dass** das Polyesterdiol (b2) auf Butan-1,4-diol und Ethan-1,2-diol basiert.

5. Thermoplastische Polyurethane gemäß Anspruch 1, **dadurch gekennzeichnet, dass** das Polyesterdiol (b2) ein Molekulargewicht kleiner oder gleich 2500 g/mol aufweist.

6. Thermoplastische Polyurethane gemäß Anspruch 1, **dadurch gekennzeichnet, dass** die Polyesterdiole (b1) und (b2) auf linearen, nicht verzweigten Dicarbonsäuren mit vier bis 12 Kohlenstoffatomen basieren.

7. Thermoplastische Polyurethane gemäß Anspruch 1, **dadurch gekennzeichnet, dass** das thermoplastische Polyurethan auf einem Polyesterdiol (b1) mit einem Molekulargewicht zwischen 2600 g/mol und 4000 g/mol auf der Basis von Butan-1,4-diol und Hexan-1,6-diol in einem Molverhältnis von Butan-1,4-diol: Hexan-1,6-diol zwischen 0,5 : 1 und 1,5 : 1 sowie Adipinsäure sowie auf einem Polyesterdiol (b2) mit einem Molekulargewicht zwischen 1500 g/mol und 2500 g/mol auf der Basis von Butan-1,4-diol und Ethan-1,2-diol in einem Molverhältnis von Butan-1,4-diol : Ethan-1,2-diol zwischen 0,5 : 1 und 1,5: 1 sowie Adipinsäure basiert, wobei das Gewichtsverhältnis von Polyesterdiol (b1) : Polyesterdiol (b2) zwischen 0,75 : 1 und 1,25 : 1 beträgt.

8. Verfahren zur Herstellung von thermoplastischen Polyurethanen mit einer Härte zwischen 50 Shore-A und 80 Shore-A gemäß einem der Ansprüche 1 bis 6 durch Umsetzung von (a) Isocyanat mit (b) gegenüber Isocyanaten reaktiven Verbindungen mit einem Molekulargewicht von 500 g/mol bis 10000 g/mol und gegebenenfalls (c) Kettenverlängerungsmitteln mit einem Molekulargewicht von 50 g/mol bis 499 g/mol gegebenenfalls in Gegenwart von (d) Katalysatoren und/oder (e) üblichen Hilfsstoffen, **dadurch gekennzeichnet, dass** man als (b) Polyesterdiol (b1) auf der Basis von Butan-1,4-diol sowie mindestens einem weiteren Diol mit mindestens 5 Kohlenstoffatomen sowie Polyesterdiol (b2) auf der Basis von Butan-1,4-diol sowie mindestens einem weiteren Diol mit zwei oder drei Kohlenstoffatomen einsetzt.

9. Verfahren gemäß Anspruch 8, **dadurch gekennzeichnet, dass** man die Umsetzung der Isocyanate (a) mit den gegenüber Isocyanaten reaktiven Verbindungen (b) und Kettenverlängerungsmitteln (c) bei einer Kennzahl kleiner 1010 durchführt.

10. Verfahren gemäß Anspruch 8, **dadurch gekennzeichnet, dass** man die Polyesterdiole (b1) und (b2) in einem Gewichtsverhältnis von (b1) : (b2) zwischen 0,75 : 1 und 1,25 : 1 einsetzt.

11. Thermoplastische Polyurethane erhältlich durch ein Verfahren gemäß einem der Ansprüche 8 bis 10.

## Claims

1. A thermoplastic polyurethane which has a hardness of from 50 Shore A to 80 Shore A and is based on (b) polyester diols, wherein a polyester diol (b1) based on butane-1,4-diol and at least one further diol having at least 5 carbon atoms and a Polyester diol (b2) based on butane-1,4-diol and at least one further diol having two or three carbon atoms are present as (b) polyester diols.

2. The thermoplastic polyurethane according to claim 1, wherein the polyester diol (b1) is based on butane-1,4-diol and hexane-1,6-diol.

3. The thermoplastic polyurethane according to claim 1, wherein the polyester diol (b1) has a molecular weight of greater than 2600 g/mol.

4. The thermoplastic: polyurethane according to claim 1, wherein the polyester diol (b2) is based on butane-1,4-diol and ethane-1,2-diol.

5. The thermoplastic polyurethane according to claim 1, wherein the polyester diol (b2) has a molecular weight of less than or equal to 2500 g/mol.

6. The thermoplastic polyurethane according to claim 1, wherein the Polyester diols (b1) and (b2) are based on linear, unbranched dicarboxylic acids having from four to 12 carbon atoms.

7. The thermoplastic polyurethane according to claim 1 which is based on a polyester diol (b1) which has a molecular weight in the range from 2600 g/mol to 4000 g/mol and is based on butane-1,4-diol and hexane-1,6-diol in a molar ratio of butane-1,4-diol:hexane-1,6-diol in the range from 0.5:1 to 1.5:1 and adipic acid and also a polyester diol (b2) which has a molecular weight in the range from 1500 g/mol to 2500 g/mol and is based on butane-1,4-diol and ethane-1,2-diol in a molar ratio of butane-1,4-diol:ethane-1,2-diol in the range from 0.5:1 to 1.5:1 and adipic acid, with the weight ratio of polyester diol (b1):polyester diol (b2) being in the range from 0.75:1 to 1.25:1.

8. A process for preparing thermoplastic polyurethanes having a hardness of from 50 Shore A to 80 Shore A according to any of claim 1 to 6 by reacting (a) isocyanate with (b) compounds which are reactive toward isocyanates and have a molecular weight of from 500 g/mol to 10 000 g/mol and, if appropriate, (c) chain extenders having a molecular weight of from 50 g/mol to 499 g/mol, if appropriate in the presence of (d) catalysts and/or (e) customary auxiliaries, wherein polyester diol (b1) based on butane-1,4-diol and at least one further diol having at least 5 carbon atoms and polyester diol (b2) based on butane-1,4-diol and at least one further diol having two or three carbon atoms are used as (b).

9. The process according to claim 8, wherein the reaction of the isocyanate (a) with the compounds (b) which are reactive toward isocyanates and chain extenders (c) is carried out at an index of less than 1010.

10. The process according to claim 8, wherein the polyester diols (b1) and (b2) are used in a weight ratio of (b1):(b2) in the range from 0.75:1 to 1.25:1.

11. A thermoplastic polyurethane obtainable by a process according to any of claims 8 to 10.

## Revendications

1. Polyuréthanes thermoplastiques présentant une dureté entre 50 Shore-A et 80 Shore-A à base de (b) polyesterdiols, **caractérisés en ce que** les polyesterdiols (b) sont un polyesterdiol (b1) à base de butane-1,4-diol ainsi que d'au moins un autre diol comprenant au moins 5 atomes de carbone ainsi qu'un polyesterdiol (b2) à base de butane-1,4-diol ainsi que d'au moins un autre diol comprenant deux ou trois atomes de carbone.

2. Polyuréthanes thermoplastiques selon la revendication 1, **caractérisés en ce que** le Polyesterdiol (b1) est à base de butane-1,4-diol et d'hexane-1,6-diol.

3. Polyuréthanes thermoplastiques selon la revendication 1, **caractérisés en ce que** le polyesterdiol (b1) présente un poids moléculaire supérieur à 2600 g/mole.

4. Polyuréthannes thermoplastiques selon la revendication 1, **caractérisés en ce que** le Polyesterdiol (b2) est à base de butane-1,4-diol et d'éthane-1,2-diol.

5. Polyuréthannes thermoplastiques selon la revendication 1, **caractérisés en ce que** le polyesterdiol (b2) présente un poids moléculaire inférieur ou égal à 2500 g/mole.

6. Polyuréthanes thermoplastiques selon la revendication 1, **caractérisés en ce que** les polyesterdiols (b1) et (b2) sont à base d'acides dicarboxyliques linéaires, non ramifiés, comprenant quatre à 12 atomes de carbone.

7. Polyuréthanes thermoplastiques selon la revendication 1, **caractérisés en ce que** le polyuréthane thermoplastique est à base d'un Polyesterdiol (b1) présentant un poids moléculaire entre 2600 g/mole et 4000 g/mole à base de butane-1,4-diol et d'hexane-1,6-diol dans un rapport molaire de butane-1,4-diol:hexane-1,6-diol entre 0,5:1 et 1,5:1 ainsi que d'acide adipique ainsi qu'à base d'un Polyesterdiol (b2) présentant un poids moléculaire entre 1500 g/mole et 2500 g/mole à base de butane-1,4-diol et d'éthane-1,2-diol dans un rapport molaire de butane-1,4-diol:éthane-1,2-diol entre 0,5:1 et 1,5:1 ainsi que d'acide adipique, le rapport pondéral de polyesterdiol (b1):polyesterdiol (b2) étant situé entre 0,75:1 et 1,25:1.

8. Procédé pour la préparation de polyuréthanes thermoplastiques présentant une dureté entre 50 Shore-A et 80 Shore-A selon l'une quelconque des revendication 1 à 6 par transformation (a) d'isocyanate avec (b) des composés réactifs par rapport aux isocyanates présentant un poids moléculaire de 500 g/mole à 10 000 g/mole et le cas échéant (c) des agents d'allongement de chaîne présentant un poids moléculaire de 50 g/mole à 499 g/mole le cas échéant en présence (d) de catalyseurs et/ou (e) d'adjuvants usuels, **caractérisé en ce qu'**on utilise comme (b) un polyesterdiol (b1) à base de butane-1,4-diol ainsi que d'au moins un autre diol comprenant au moins 5 atomes de carbone ainsi qu'un polyesterdiol (b2) à base de butane-1,4-diol ainsi que d'au moins un autre diol comprenant deux ou trois atomes de carbone.

9. Procédé selon la revendication 8, **caractérisé en ce qu'**on réalise la transformation des isocyanates (a) avec des composés réactifs par rapport aux isocyanates (b) et des agents d'allongement de chaîne (c) à un ratio inférieur à 1010.

10. Procédé selon la revendication 8, **caractérisé en ce qu'**on utilise les polyesterdiols (b1) est (b2) dans un rapport pondéral de (b1):(b2) entre 0,75:1 et 1,25:1.

11. Polyuréthanes thermoplastique, pouvant être obtenus par un procédé selon l'une quelconque des revendications 8 à 10.
